# EUROPEAN PATENT APPLICATION

(11) **EP 4 273 961 A1**
(43) Date of publication of application: **08.11.2023**
(21) Application number: 21912994.7
(22) Date of filing: 05.07.2021
(51) Int. Cl.: H01M 4/38, H01M 4/587, H01M 4/62, H01M 10/0525

(54) **NEGATIVE ELECTRODE ACTIVE MATERIAL, ELECTROCHEMICAL DEVICE, AND ELECTRONIC DEVICE**

(30) Priority: 31.12.2020 CN 202011623085
(71) Applicant: Ningde Amperex Technology Limited, Ningde, Fujian 352100 (CN)
(72) Inventor: CHEN, Congrong, Ningde, Fujian 352100 (CN)
(74) Representative: Icosa
(86) International application number: PCT/CN2021/104552
(87) International publication number: WO 2022/142241

(57) **Abstract**

This application relates to a negative electrode active material, an electrochemical apparatus, and an electronic apparatus. The negative electrode active material includes a silicon-carbon composite, where the silicon-carbon composite includes a silicon oxide and graphite, a general formula of the silicon oxide is SiOx, 0.5≤x≤1.6, and the silicon-carbon composite satisfies the following relation: 2≤b/a<6, wherein a represents an average particle size of the silicon oxide, and b represents an average particle size of graphite. The negative electrode active material as a negative electrode active material of a lithium-ion battery can prolong cycle life and enhance cycling structure stability.

## Description

### CROSS-REFERENCE TO RELATED APPLICATIONS

This application claims priority to Chinese Patent Application No. 202011623085.0, filed on December 31, 2020 and entitled "NEGATIVE ELECTRODE ACTIVE MATERIAL, ELECTROCHEMICAL APPARATUS, AND ELECTRONIC APPARATUS", which is incorporated herein by reference in its entirety.

### TECHNICAL FIELD

This application relates to the field of lithium-ion batteries. Specifically, this application relates to a negative electrode active material and a preparation method thereof. This application further relates to a negative electrode, an electrochemical apparatus, and an electronic apparatus that contain such negative electrode active material.

### BACKGROUND

In recent years, silicon has been viewed as a lithium-ion negative electrode active material most likely to be applied on a large scale because its reversible capacity is up to 4200 mAh/g. The material swells and contracts in during charging and discharging. Therefore, a tight protective structure can effectively alleviate damage to the structure in the process. In addition, the compromised material generates a fresh interface, and many cycles produce a large number of SEI by-products. When the interface is not tightly or firmly bound, this layer of by-products accelerates peeling off of a carbon layer, thereby accelerating fading and failure of the material.

Main means to improve cycling performance of a silicon-oxygen material include the following: using carbon protected silicon-oxygen material, carbon protected silicon-oxygen material with intermediate void layer, silicon-oxygen material with reduced size, polymer protected silicon-oxygen material, amorphous oxide protected silicon-oxide material, and the like. Among these protection means, carbon protected silicon-oxygen materials become the mainstream in application at present because of their good electronic conductivity and high stability. However, the use of carbon protected silicon-oxygen materials is likely to cause decarburization due to repeated shearing forces during processing of battery electrode plates, affecting coulombic efficiency, and formation of SEI film (solid electrolyte interphase film) consumes electrolyte. In addition, a carbon layer is prone to peeling off from a substrate due to swelling, contraction, and cracking of silicon during cycles. With the formation of the SEI, the carbon layer is wrapped by by-products, greatly increasing electrochemical impedance and aggravating polarization, thereby affecting cycle life. Therefore, improving interface binding performance between the carbon layer and the silicon-oxygen materials is of vital importance to prolong the cycle life and enhance cycling structure stability.

Although polymer protected silicon-oxygen materials and amorphous oxide protected silicon-oxygen materials can effectively avoid direct contact between an electrolyte and the silicon-oxygen materials, poor conductivity of polymers and amorphous oxides increases electrochemical impedance and aggravates polarization. Consequently, not only the silicon-oxygen materials are not allowed for effective lithium intercalation and deintercalation, but also a protective layer is prone to be destroyed during lithium intercalation and deintercalation, affecting cycle life. Therefore, improving the conductivity of the silicon-oxygen materials and suppressing volume swelling of the silicon-oxygen materials while avoiding direct contact between the electrolyte and the silicon-oxygen materials are of vital importance to prolong cycle life of a negative electrode active material and enhance cycling structure stability.

### SUMMARY

In view of deficiencies of the prior art, a first aspect of this application provides a negative electrode active material. The negative electrode active material as a negative electrode active material of a lithium-ion battery can prolong cycle life and enhance cycling structure stability.

The negative electrode active material provided in this application includes a silicon-carbon composite, where the silicon-carbon composite includes a silicon oxide and graphite, a general formula of the silicon oxide is SiOx, 0.5≤x≤1.6, and the silicon-carbon composite satisfies the following relation: 2≤b/a<6, where a represents an average particle size of the silicon oxide, and b represents an average particle size of graphite. The inventor of this application finds through research that a proper granulation particle size and better cycle improvement can be implemented in a case that the average particle sizes of SiOx and graphite satisfy 2≤b/a<6.

According to some preferred embodiments of this application, the average particle size of the silicon oxide ranges from 2 µm to 6 µm. According to some preferred embodiments of this application, the average particle size of graphite ranges from 4.1 µm to 30 µm. The use of both the silicon oxide and graphite with a proper particle size range can effectively improve the cycling performance of the negative electrode active material.

According to some preferred embodiments of this application, c represents Dᵥ50 of the negative electrode active material, and c ranges from 6.1 µm to 60 µm. The negative electrode active material with a proper particle size range is selected through a granulation process.

According to some preferred embodiments of this application, the negative electrode active material satisfies the following relation: a+b≤c≤5b, where a represents the average particle size of the silicon oxide, b represents the average particle size of graphite, and c represents Dᵥ50 of the negative electrode active material. When Dᵥ50 of the negative electrode active material satisfies this relation, a more proper granulation particle size and better cycle improvement can be implemented.

According to some preferred embodiments of this application, the negative electrode active material further includes a protective layer provided on a surface of the silicon-carbon composite. According to some preferred embodiments, the protective layer includes at least one of carbon nanotubes, amorphous carbon, or graphene. Carbon nanotubes wrap surfaces of graphite and SiOx to enhance binding between SiOx and graphite, and are also interspersed between SiOx and graphite to increase ion and electronic conductivity of the material. Amorphous carbon protects the surfaces of graphite and SiOx, and contacts with carbon nanotubes to play a role of binding and inhibit volume swelling of silicon oxide. In the negative electrode active material, the protective layer not only improves a conductive interface between silicon oxide and graphite, but also improves the conductivity of the material, thereby improving the cycling performance, swelling rate, and kinetics of a negative electrode with mixed materials.

According to some preferred embodiments of this application, the protective layer includes a first protective material and a second protective material, where the first protective material includes at least one of carbon nanotubes, amorphous carbon, or graphene, and the second protective material includes at least one of carbon nanotubes, amorphous carbon, or graphene. According to some preferred embodiments of this application, a tube length of the carbon nanotube is d, where 1 µm≤d≤15 µm. According to some preferred embodiments of this application, in the negative electrode active material, a mass fraction of the protective layer ranges from 0.05% to 5%.

According to some preferred embodiments of this application, the protective layer includes a first protective material and a second protective material, where the first protective material includes at least one of carbon nanotubes, amorphous carbon, or graphene, and the second protective material includes at least one of carbon nanotubes, amorphous carbon, or graphene. Carbon nanotubes wrap surfaces of graphite and SiOx to enhance binding between SiOx and graphite, and are also interspersed between SiOx and graphite to increase ion and electronic conductivity of the material. Amorphous carbon protects the surfaces of graphite and SiOx, and contacts with carbon nanotubes to play a role of binding and inhibit volume swelling of silicon oxide. The protective layer not only improves a conductive interface between silicon oxide and graphite, but also improves the conductivity of the material, thereby improving the cycling performance, swelling rate, and kinetics of the negative electrode.

According to some preferred embodiments of this application, a tube length of the carbon nanotube is d, where 1 µm≤d≤15 µm. Carbon nanotubes of a given length can provide long range conductivity between particles during cycling. If the tube length of carbon nanotubes istoo short, there is no obvious effect in improving long range conductivity between particles during cycling. If the tube length of carbon nanotubes is too long, particles are prone to agglomeration, aggravating swelling.

According to some preferred embodiments of this application, in the negative electrode active material, a mass fraction of the protective layer ranges from 0.05% to 5%. In the negative electrode active material, the role of the protective layer is to protect an interface of the negative electrode active material, to avoid more direct contact between particle surfaces and an electrolyte. However, if the mass fraction of the protective layer is too high, it is easy to cause more side reactions to the protective layer.

According to some preferred embodiments of this application, the protective layer includes a first protective material and a second protective material, where the first protective material and the second protective material are in contact with each other, a thickness of the first protective material ranges from 20 nm to 300 nm, and a thickness of the second protective material ranges from 20 nm to 500 nm. The thickness is a vertical distance from a location where the first protective material is in contact with the silicon-carbon composite (SiOx/graphite) to a location where the first protective material is in contact with the second protective material, namely amorphous carbon. The thickness of the second protective material ranges from 20 nm to 500 nm, and the thickness is calculated from the surface of SiOx in a direction perpendicular to the surface. The thickness of amorphous carbon needs to be controlled within 500 nm. Too thick amorphous carbon is not conducive to improving ion conduction and long - range conductivity of carbon nanotubes.

According to some preferred embodiments of this application, a specific surface area of the negative electrode active material ranges from 1 m²/g to 50 m²/g. According to some preferred embodiments of this application, in the negative electrode active material, a mass fraction of the silicon oxide ranges from 5% to 50%, and a mass fraction of graphite ranges from 25% to 93.5%.

According to some preferred embodiments of this application, a specific surface area of the negative electrode active material ranges from 1.11 m²/g to 1.59 m²/g. If the specific surface area of the negative electrode active material is too large, side reactions are prone to occur during cycling.

According to some embodiments of this application, graphite includes at least one of artificial graphite or natural graphite, where artificial graphite or natural graphite includes at least one of meso-carbon microbeads or hard carbon. Carbon nanotubes include single-wall carbon nanotubes, multi-wall carbon nanotubes, or a combination thereof. Amorphous carbon is obtained from carbonization of organic matter, where the organic matter includes at least one of carboxymethyl cellulose and its metal salts, polyvinylpyrrolidone, polyacrylate, polyimide, polyamide, polyamideimide, polyvinylidene fluoride, styrene butadiene rubber, sodium alginate, polyvinyl alcohol, polytetrafluoroethylene, polyacrylonitrile, alkane, alkene, or alkyne. According to the negative electrode active material provided in this application, silicon monoxide and graphite are used for composite granulation, and carbon nanotubes and amorphous carbon are used to protect silicon and graphite, acting as a bridge to enhance contact between silicon monoxide and graphite, so as to improve conductivity, and inhibit volume swelling of the silicon monoxide, thereby improving cycling performance, a swelling rate, and kinetics of a negative electrode.

A second aspect of this application provides a method for preparing the negative electrode active material in the first aspect, including the following steps: Step A. Mix a silicon oxide and graphite in a solvent to form a first mixture; step B. Mix carbon nanotubes with the first mixture to form a second mixture; step C. Spray drying the second mixture to form granulation; and step D. Sinter granulation products obtained in step C in an inert atmosphere.

According to a third aspect, this application provides a negative electrode. The negative electrode includes the negative electrode active material in the first aspect of this application.

According to some embodiments of this application, the negative electrode further includes a conductive agent and a binder.

According to some embodiments of this application, compacted density of the negative electrode under a pressure of 5t is P, and a mass fraction of carbon nanotubes (relative to total mass of the negative electrode active material) is n. In a case of 0.05%<n<3.2%, P increases as n increases.

According to some further embodiments of this application, compared with a negative electrode with the same amount of silicon, the negative electrode made of the negative electrode active material has a sheet resistance less than 1 ohm.

The negative electrode provided in this application can be prepared by using a common method in the art. Usually, a negative electrode active material, an optional conductive agent (for example, a carbon material such as carbon black and metal particle), a binder (for example, SBR), an optional additive (for example, PTC thermistor material), and other materials are mixed and dispersed in a solvent (for example, deionized water), the resulting mixture is uniformly stirred to form a slurry, and then the slurry is uniformly applied on a negative electrode current collector, followed by drying, to obtain a negative electrode including a negative electrode membrane. A material such as metal foil or a porous metal plate may be used as the negative electrode current collector.

According to a fourth aspect, this application provides an electrochemical apparatus, including a negative electrode, where the negative electrode includes the negative electrode active material in the first aspect of this application.

According to the fourth aspect, the electrochemical apparatus provided in this application includes an electrolyte, where the electrolyte further includes a lithium salt. The lithium salt includes lithium bis(fluorosulfonyl)imide (LiFSI) and lithium hexafluorophosphate (LiPF₆). According to some embodiments of this application, a concentration of the lithium salt ranges from 1 mol/L to 2 mol/L, and a mass ratio of the lithium bis(fluorosulfonyl)imide to the lithium hexafluorophosphate ranges from 0.06 to 5. Adjusting the mass ratio to the LiFSI to the LiPF₆ improves cycling performance and swelling performance of a battery cell. This is mainly because interaction between a silicon-carbon composite in a negative electrode material and the lithium salt in the electrolyte enhances contact between a negative electrode and the electrolyte, thereby improving cycling performance of the battery cell.

According to some embodiments of this application, in the electrochemical apparatus, the negative electrode active material further includes a protective layer provided on a surface of the silicon-carbon composite, and the protective layer includes at least one of carbon nanotubes, amorphous carbon, or graphene.

According to some embodiments of this application, in the electrochemical apparatus, the protective layer includes a first protective material and a second protective material. A thickness of the first protective material ranges from 20 nm to 300 nm, and a thickness of the second protective material ranges from 20 nm to 500 nm.

According to some embodiments of this application, the protective layer includes a first protective material and a second protective material, where the first protective material includes at least one of carbon nanotubes, amorphous carbon, or graphene, and the second protective material includes at least one of carbon nanotubes, amorphous carbon, or graphene. According to some preferred embodiments of this application, a tube length of the carbon nanotube is d, where 1 µm≤d≤15 µm. According to some preferred embodiments of this application, in the negative electrode active material, a mass fraction of the protective layer ranges from 0.05% to 5%.

According to some embodiments of this application, in the electrochemical apparatus, a specific surface area of the negative electrode active material ranges from 1 m²/g to 50 m²/g. According to some preferred embodiments of this application, in the negative electrode active material, a mass fraction of the silicon oxide ranges from 5% to 50%, and a mass fraction of graphite ranges from 25% to 93.5%. According to some preferred embodiments of this application, a ranges from 2 µm to 6 µm. According to some preferred embodiments of this application, b ranges from 4.1 µm to 30 µm. According to some preferred embodiments of this application, c represents Dᵥ50 of the negative electrode active material, and c ranges from 6.1 µm to 60 µm. According to some preferred embodiments of this application, c represents Dᵥ50 of the negative electrode active material, and a+b≤c≤5b.

The electrochemical apparatus in this application is any apparatus capable of electrochemical reactions. Specific examples of the apparatus include all kinds of primary batteries, secondary batteries, fuel batteries, solar batteries, or capacitors. Specially, the electrochemical apparatus is a lithium secondary battery, including a lithium metal secondary battery, a lithium-ion secondary battery, a lithium polymer secondary battery, or a lithium-ion polymer secondary battery.

According to a fifth aspect, this application further provides an electronic apparatus, including the electrochemical apparatus in the third aspect of this application.

The electronic apparatus in this application is not particularly limited. In some embodiments, the electronic apparatus in this application includes, but is not limited to: notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, automobiles, motorcycles, assisted bicycles, bicycles, lighting apparatuses, toys, game machines, clocks, electric tools, flashlights, cameras, large household storage batteries, lithium-ion capacitors, or the like.

According to the negative electrode active material provided in this application, a proper granulation particle size and better cycle improvement are implemented when median particle sizes of SiOx and graphite satisfy 2≤b/a<6. The negative electrode active material is used for a negative electrode of a lithium-ion battery, and can prolong cycle life and enhance cycling structure stability.

### BRIEF DESCRIPTION OF DRAWINGS

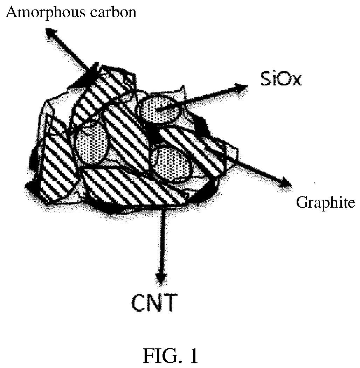

FIG. 1 is a schematic structural diagram of a negative electrode active material according to an embodiment of this application.

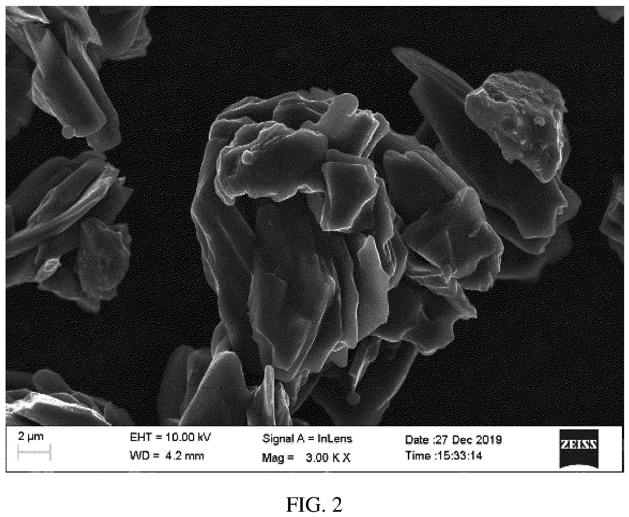

FIG. 2 is an SEM diagram of a negative electrode active material in Example 1 according to this application.

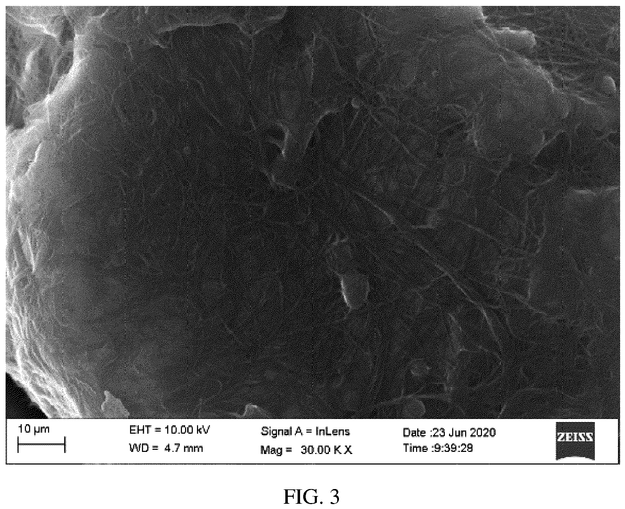

FIG. 3 is an SEM diagram of a negative electrode active material in Example 3 according to this application.

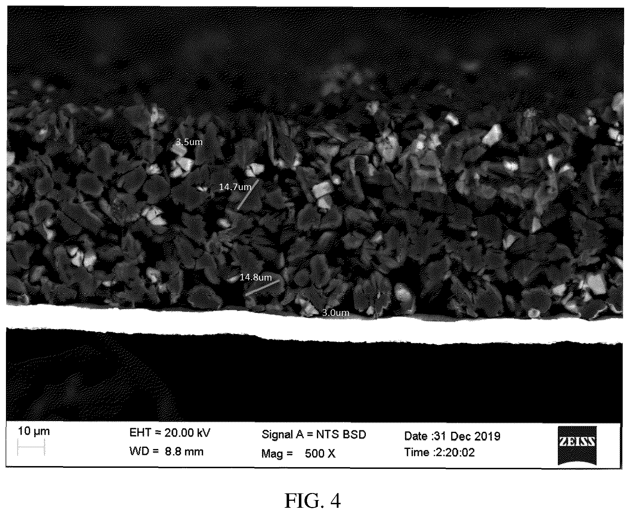

FIG. 4 is a sectional view of a negative electrode in Example 1 according to this application.

### DESCRIPTION OF EMBODIMENTS

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each point or individual value may act as its own lower limit or upper limit to be combined with any other point or individual value or combined with any other lower limit or upper limit to form a range not expressly recorded.

In the descriptions of this specification, "more than" or "less than" is inclusive of the present number unless otherwise specified.

Unless otherwise specified, terms used in this application have well-known meanings generally understood by persons skilled in the art. Unless otherwise specified, numerical values of parameters mentioned in this application may be measured by using various measurement methods commonly used in the art (for example, testing may be performed by using a method provided in the embodiments of this application).

A list of items connected by the terms "at least one of", "at least one piece of", "at least one kind of", or the like may mean any combination of the listed items. For example, if items A and B are listed, the phrase "at least one of A and B" means only A; only B; or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain a single constituent or a plurality of constituents. The item B may contain a single constituent or a plurality of constituents. The item C may contain a single constituent or a plurality of constituents.

### I. Negative electrode active material

The negative electrode active material provided in this application includes a silicon-carbon composite, where the silicon-carbon composite includes a silicon oxide and graphite, a general formula of the silicon oxide is SiOx, 0.5≤x≤1.6, and the silicon-carbon composite satisfies the following relation: 2≤b/a<6, where a represents an average particle size of the silicon oxide, and b represents an average particle size of graphite. The inventor of this application finds through research that a proper granulation particle size and better cycle improvement can be implemented in a case that the median particle sizes of SiOx and graphite satisfy 2≤b/a<6.

According to some preferred embodiments of this application, the average particle size of the silicon oxide ranges from 2 µm to 6 µm, and the average particle size of graphite ranges from 4.1 µm to 30 µm. Cycling of the silicon oxide is affected if the average particle size of the silicon oxide is too large or too small. The use of both the silicon oxide and graphite with a proper particle size range can effectively improve the cycling performance of the negative electrode active material.

According to some embodiments of this application, the average particle size of the silicon oxide ranges from 2 µm to 6 µm, and may be specifically 2 µm, 2.5 µm, 3 µm, 3.5 µm, 4 µm, 4.5 µm, 5 µm, 5.5 µm, or 6 µm, or in a range defined by any two of these numerical values.

According to some embodiments of this application, the average particle size of graphite ranges from 4.1 µm to 30 µm, and may be specifically 5 µm, 5.5 µm, 6 µm, 6.5 µm, 7 µm, 7.5 µm, 8 µm, 9 µm, 10 µm, 11 µm, 12 µm, 13 µm, 14 µm, 15 µm, 16 µm, 17 µm, 18 µm, 19 µm, 20 µm, 23 µm, 25 µm, or 28 µm, or in a range defined by any two of these numerical values.

According to some preferred embodiments of this application, c represents Dᵥ50 of the negative electrode active material, and c ranges from 6.1 µm to 60 µm. The negative electrode active material with a proper particle size range is selected through a granulation process.

According to some preferred embodiments of this application, the negative electrode active material satisfies the following relation: a+b≤c≤5b, where a represents the average particle size of the silicon oxide, b represents the average particle size of graphite, and c represents Dᵥ50 of the negative electrode active material. When Dᵥ50 of the negative electrode active material satisfies this relation, a more proper granulation particle size and better cycle improvement can be implemented. According to some embodiments of this application, Dᵥ50 of the negative electrode active material ranges from 6.1 µm to 60 µm, and may be specifically 6.5 µm, 7 µm, 7.5 µm, 8 µm, 9 µm, 10 µm, 11 µm, 12 µm, 13 µm, 14 µm, 15 µm, 16 µm, 17 µm, 18 µm, 19 µm, 20 µm, 23 µm, 25 µm, 28 µm, 30 µm, 35 µm, 38 µm, 42 µm, 45 µm, 48 µm, 50 µm, or 55 µm, or in a range defined by any two of these numerical values.

According to some preferred embodiments of this application, the negative electrode active material further includes a protective layer provided on a surface of the silicon-carbon composite. According to some preferred embodiments, the protective layer includes at least one of carbon nanotubes, amorphous carbon, or graphene. Carbon nanotubes wrap surfaces of graphite and SiOx to enhance binding between SiOx and graphite, and are also interspersed between SiOx and graphite to increase ion and electronic conductivity of the material. Amorphous carbon protects the surfaces of graphite and SiOx, and contacts with carbon nanotubes to play a role of binding and inhibit volume swelling of silicon monoxide. In the negative electrode active material, the protective layer not only improves a conductive interface between silicon and graphite, but also improves conductivity of the material, thereby improving the cycling performance, swelling rate, and kinetics of the negative electrode with mixed materials.

According to some preferred embodiments of this application, the protective layer includes a first protective material and a second protective material, where the first protective material and the second protective material are in contact with each other, a thickness of the first protective material ranges from 20 nm to 300 nm, and a thickness of the second protective material ranges from 20 nm to 500 nm. The thickness is a vertical distance from a location where the first protective material is in contact with the silicon-carbon composite (SiOx/graphite) to a location where the first protective material is in contact with the second protective material, namely amorphous carbon. The thickness of the second protective material ranges from 20 nm to 500 nm, and the thickness is for non-prescriptive protection and is calculated from the surface of SiOx. In some embodiments, the thickness of the first protective material is 20 nm, 30 nm, 50 nm, 80 nm, 100 nm, 120 nm, 150 nm, 180 nm, 200 nm, 250 nm, 300 nm, or in a range defined by any two of these numerical values. In some embodiments, the thickness of the second protective material is 20 nm, 30 nm, 50 nm, 80 nm, 100 nm, 120 nm, 150 nm, 180 nm, 200 nm, 250 nm, 300 nm, 320 nm, 350 nm, 500 nm, or 400 nm, or in a range defined by any two of these numerical values. The thickness of amorphous carbon needs to be controlled within 500 nm. Too thick amorphous carbon is not conducive to improving ion conduction and long - range conductivity of carbon nanotubes..

According to some preferred embodiments of this application, a specific surface area of the negative electrode active material ranges from 1 m²/g to 50 m²/g, and may be specifically, for example, 1 m²/g, 5 m²/g, 8 m²/g, 10 m²/g, 15 m²/g, 18 m²/g, 23 m²/g, 30 m²/g, 38 m²/g, 42 m²/g, or 48 m²/g, or in a range defined by any two of these numerical values. If the specific surface area of the negative electrode active material is too large, side reactions are prone to occur during cycling.

According to some preferred embodiments of this application, a tube length of the carbon nanotube is d, where 1 µm≤d≤15 µm, for example, 1 µm, 2 µm, 5 µm, 8 µm, 10 µm, 12 µm, or d may be in a range defined by any two of these numerical values. Carbon nanotubes of a given length can provide long range conductivity between particles during cycling. If carbon nanotubes are too short, there is no obvious effect in improving long range conductivity between particles during cycling. If carbon nanotubes are too long, particles are prone to agglomeration, aggravating swelling.

According to some preferred embodiments of this application, in the negative electrode active material, a mass fraction of the protective layer ranges from 0.05% to 5%. In the negative electrode active material, the role of the protective layer is to protect an interface of the negative electrode active material, to avoid more direct contact between particle surfaces and an electrolyte. However, if the mass fraction of the protective layer is too high, it is easy to cause more side reactions to the protective layer.

According to some embodiments of this application, in the negative electrode active material, a mass fraction of the silicon oxide ranges from 5% to 50%, and may be specifically 5%, 8%, 10%, 12%, 15%, 20%, 25%, 30%, 35%, 40%, or 45%, or in a range defined by any two of these numerical values.

According to some embodiments of this application, in the negative electrode active material, a mass fraction of graphite ranges from 25% to 93.5%, and may be specifically 25%, 28%, 30%, 35%, 40%, 50%, 55%, 60%, 65%, 70%, 75%, 80%, 85%, or 90%, or in a range defined by any two of these numerical values.

According to some embodiments of this application, in the negative electrode active material, a mass fraction of carbon nanotubes ranges from 0.05% to 5%, and may be specifically 0.10%, 0.25%, 0.30%, 0.35%, 0.40%, 0.50%, 0.55%, 0.60%, 0.65%, 0.70%, 0.75%, 0.80%, 1.0%, 1.25%, 1.5%, 1.75%, 2.0%, 2.25%, 2.50%, 2.75%, 3.0%, 3.25%, 3.5%, 3.75%, 4.0%, 4.25%, 4.5%, or 5.0%, or in a range defined by any two of these numerical values.

According to some embodiments of this application, in the negative electrode active material, a mass fraction of amorphous carbon ranges from 0.1% to 20%, and may be specifically 0.1%, 0.5%, 1.0%, 1.5%, 2%, 3%, 5%, 8%, 10%, 12%, 15%, or 18%, or in a range defined by any two of these numerical values.

According to some embodiments of this application, graphite includes at least one of artificial graphite or natural graphite, where artificial graphite or natural graphite includes at least one of meso-carbon microbeads or hard carbon. Carbon nanotubes include single-wall carbon nanotubes, multi-wall carbon nanotubes, or a combination thereof. Amorphous carbon is obtained from carbonization of organic matter, where the organic matter includes at least one of carboxymethyl cellulose and its metal salts, polyvinylpyrrolidone, polyacrylate, polyimide, polyamide, polyamideimide, polyvinylidene fluoride, styrene butadiene rubber, sodium alginate, polyvinyl alcohol, polytetrafluoroethylene, polyacrylonitrile, alkane, alkene, or alkyne. According to the negative electrode active material provided in this application, silicon monoxide and graphite are used for composite granulation, and carbon nanotubes and amorphous carbon are used to protect silicon and graphite, acting as a bridge to enhance contact between silicon monoxide and graphite, so as to improve conductivity, and inhibit volume swelling of the silicon monoxide. The composite negative electrode active material improves not only a conductive interface between silicon and graphite, and carbon nanotubes and amorphous carbon can not only stabilize the structure of the material, but also improve conductivity of the material, thereby improving the cycling performance, swelling rate, and kinetics of the negative electrode with mixed materials.

II. Method for preparing negative electrode active material

The method for preparing negative electrode active material provided by this application includes the following steps.

Step A. Mix a silicon oxide and graphite in a solvent to form a first mixture.

Step B. Mix carbon nanotubes with the first mixture to form a second mixture.

Step C. Spray drying the second mixture to form granulation.

Step D. Sinter granulation product obtained in step C in an inert atmosphere.

In some embodiments of the preparation method, a general formula of the silicon oxide is SiOx, 0.5<x<1.6, and 2≤b/a<6, where a represents an average particle size of the silicon oxide, and b represents an average particle size of graphite.

In some embodiments of the preparation method, the average particle size of the silicon oxide ranges from 2 µm to 6 µm, and may be specifically 2 µm, 2.5 µm, 3 µm, 3.5 µm, 4 µm, 4.5 µm, 5 µm, 5.5 µm, or 6 µm, or in a range defined by any two of these numerical values.

In some embodiments of the preparation method, the average particle size of graphite ranges from 4.1 µm to 30 µm, and may be specifically 5 µm, 5.5 µm, 6 µm, 6.5 µm, 7 µm, 7.5 µm, 8 µm, 9 µm, 10 µm, 11 µm, 12 µm, 13 µm, 14 µm, 15 µm, 16 µm, 17 µm, 18 µm, 19 µm, 20 µm, 23 µm, 25 µm, or 28 µm, or in a range defined by any two of these numerical values.

In some embodiments of the preparation method, a tube length of the carbon nanotube is d, where 1 µm≤d≤15 µm, and may be specifically, for example, 1 µm, 2 µm, 5 µm, 8 µm, 10 µm, or 12 µm, or in a range defined by any two of these numerical values.

In some embodiments of the preparation method, in step B, carbon nanotubes are added to the first mixture for mixing in a form of a carbon nanotube slurry. According to an embodiment of this application, the carbon nanotube slurry includes carbon nanotubes and organic matter. Specifically, the organic matter may be selected from at least one of carboxymethyl cellulose and its metal salts, polyvinylpyrrolidone, polyacrylate, polyimide, polyamide, polyamideimide, polyvinylidene fluoride, styrene butadiene rubber, sodium alginate, polyvinyl alcohol, polytetrafluoroethylene, polyacrylonitrile, alkane, alkene, or alkyne.

In some embodiments of the preparation method, the solvent in step A may be one or more of water, ethanol, methanol, n-hexane, N,N-dimethylformamide, pyrrolidone, acetone, toluene, isopropanol, or n-propyl alcohol, and preferably, water.

In some embodiments of the preparation method, a sintering temperature in step D may range from 450°C to 1100°C, preferably from 500°C to 900°C, and more preferably from 500°C to 700°C. According to some embodiments, the sintering temperature falls within the range of 575°C to 625°C, such as 600°C.

In some embodiments of the preparation method, the inert atmosphere in step D may be one or a mixture of nitrogen and argon, and preferably, nitrogen.

### III. Negative electrode

In some embodiments, the negative electrode provided in this application includes the negative electrode active material in the first aspect of this application.

In some embodiments, the negative electrode provided in this application further includes a conductive agent and a binder.

In some embodiments, the negative electrode further includes a current collector, where the negative electrode active material is located on the current collector.

In some embodiments, the current collector includes copper foil, nickel foil, stainless steel foil, titanium foil, foamed nickel, foamed copper, polymer base coated with conductive metal, a combination thereof.

In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, or the like.

In some embodiments, the conductive agent includes, but is not limited to: carbon-based materials, metal-based materials, conductive polymers, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

According to some embodiments of this application, compacted density of the negative electrode under a pressure of 5t is P, and a mass fraction of carbon nanotubes (relative to total mass of the negative electrode active material) is n. In a case of 0.05%<n<3.2%, P increases as n increases.

According to some further embodiments of this application, compared with a negative electrode with the same amount of silicon, the negative electrode made of the negative electrode active material has a sheet resistance less than 1 ohm.

The negative electrode provided in this application may be prepared by using a common method in the art. Usually, a negative electrode active material, an optional conductive agent (for example, a carbon material such as carbon black and metal particle), a binder (for example, SBR), an optional additive (for example, PTC thermistor material), and other materials are mixed and dispersed in a solvent (for example, deionized water), the resulting mixture is uniformly stirred to form a slurry, and then the slurry is uniformly applied on a negative electrode current collector, followed by drying, to obtain a negative electrode including a negative electrode membrane. A material such as metal foil or a porous metal plate may be used as the negative electrode current collector.

### IV. Electrochemical apparatus

An embodiment of this application provides an electrochemical apparatus. The electrochemical apparatus includes a negative electrode, a positive electrode, an electrolyte, and a separator.

In some embodiments, the electrochemical apparatus in this application includes a positive electrode having a positive electrode active material capable of occluding and releasing metal ions; the negative electrode according to this application; an electrolyte; and a separator disposed between the positive electrode and the negative electrode.

### Negative electrode

The negative electrode of the electrochemical apparatus in this application includes the negative electrode active material according to this application.

### Positive electrode

Materials, components and manufacturing methods of the positive electrode which can be used in the embodiments of this application include any technology disclosed in the prior art.

In some embodiments, the positive electrode includes a current collector and a positive electrode active material layer provided on the current collector.

In some embodiments, the positive electrode active material includes, but is not limited to: lithium cobalt oxide (LiCoO₂), lithium-nickel-cobalt-manganese (NCM) ternary material, lithium iron phosphate (LiFePO₄), or lithium manganate (LiMn₂O₄).

In some embodiments, the positive electrode active material layer further includes a binder, and optionally includes a conductive material. The binder enhances binding between particles of the positive electrode active material, and binding between the positive electrode active material and the current collector.

In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, or the like.

In some embodiments, the conductive material includes, but is not limited to: carbon-based materials, metal-based materials, conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments, the current collector may include, but is not limited to: aluminum.

The positive electrode can be prepared by a preparation method known in the art. For example, the positive electrode may be obtained by using the following method: mixing the active material, the conductive material, and the binder in a solvent to prepare an active material composition, and applying the active material composition on the current collector. In some embodiments, the solvent may include, but is not limited to: N-methylpyrrolidone.

### Electrolyte

The electrolyte that can be used in the embodiments of this application may be an electrolyte known in the prior art.

In some embodiments, the electrolyte includes an organic solvent, a lithium salt, and an additive. The organic solvent of the electrolyte according to this application may be any organic solvent known in the prior art which can be used as a solvent of the electrolyte. An electrolyte used in the electrolyte according to this application is not limited, and may be any electrolyte known in the prior art. The additive of the electrolyte according to this application may be any additive known in the prior art which can be used as an additive of the electrolyte.

In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes at least one of an organic lithium salt or an inorganic lithium salt.

In some embodiments, the lithium salt includes, but is not limited to: lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂(LiTFSI), lithium bis(fluorosulfonyl)imide Li(N(SO₂F)₂)(LiFSI), lithium bis(oxalate) borate LiB(C₂O₄)₂(LiBOB), or lithium difluoro(oxalato)borate LiBF₂(C₂O₄)(LiDFOB).

In some embodiments, a concentration of the lithium salt in the electrolyte ranges from 0.5 mol/L to 3 mol/L, from 0.5 mol/L to 2 mol/L, or from 0.8 mol/L to 1.5mol/L.

### Separator

In some embodiments, the separator is provided between the positive electrode and the negative electrode to prevent a short circuit. The material and shape of the separator that can be used in the embodiments of this application are not specifically limited, and any technology disclosed in the prior art may be used for the separator. In some embodiments, the separator includes a polymer or an inorganic substance formed by a material stable to the electrolyte of this application.

For example, the separator may include a substrate layer and a surface treatment layer. The substrate layer is a non-woven fabric, film, or composite film of a porous structure. The substrate layer is made of at least one of polyethylene, polypropylene, polyethylene terephthalate, or polyimide. Specifically, a polypropylene porous film, a polyethylene porous film, polypropylene non-woven fabric, polyethylene non-woven fabric, or a polypropylene-polyethylene-polypropylene porous composite film may be selected.

The surface treatment layer is provided on at least one surface of the substrate layer, and the surface treatment layer may be a polymer layer or an inorganic layer, or may be a layer formed by a mixed polymer and an inorganic substance.

The inorganic substance layer includes an inorganic particle and a binder. The inorganic particle includes at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene.

The polymer layer contains a polymer, and the material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

In some embodiments, the electrochemical apparatus of this application includes, but is not limited to: all kinds of primary batteries, secondary batteries, fuel cells, solar cells, or capacitors.

In some embodiments, the electrochemical apparatus is a lithium secondary battery.

In some embodiments, the lithium secondary battery includes, but is not limited to: a lithium metal secondary battery, a lithium-ion secondary battery, a lithium polymer secondary battery or a lithium-ion polymer secondary battery.

### V. Electronic apparatus

The electronic apparatus in this application may be any apparatus using the electrochemical apparatus according to the fourth aspect of this application.

In some embodiments, the electronic apparatus includes, but is not limited to: notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, automobiles, motorcycles, assisted bicycles, bicycles, lighting apparatuses, toys, game machines, clocks, electric tools, flashlights, cameras, large household storage batteries, lithium-ion capacitors, or the like.

The process for preparing a negative electrode active material in Example 1 to Example 13 and Comparative Example 1 and Comparative Example 2 is as follows:
1. 100 g of SiOx (x ranged from 0.5 to 1.5), and graphite powder (mass of natural graphite was shown in Table 1) were dispersed in water and stirred for 10 min, and then 200 g (mass of carbon nanotubes was shown in Table 1, a mass fraction of carboxymethyl cellulose was 0.6%, and the others were a solvent water) of carbon nanotubes were added and stirred for 4 h.
2. Dry powder was obtained after the solvent was removed.
3. The dry powder in step 2 was sintered in a nitrogen atmosphere with a nitrogen flow rate of 0.5 L/min to 1.5 L/min, and kept the inside of the furnace at normal pressure with a sintering temperature of 600°C and sintering duration of 2 h.

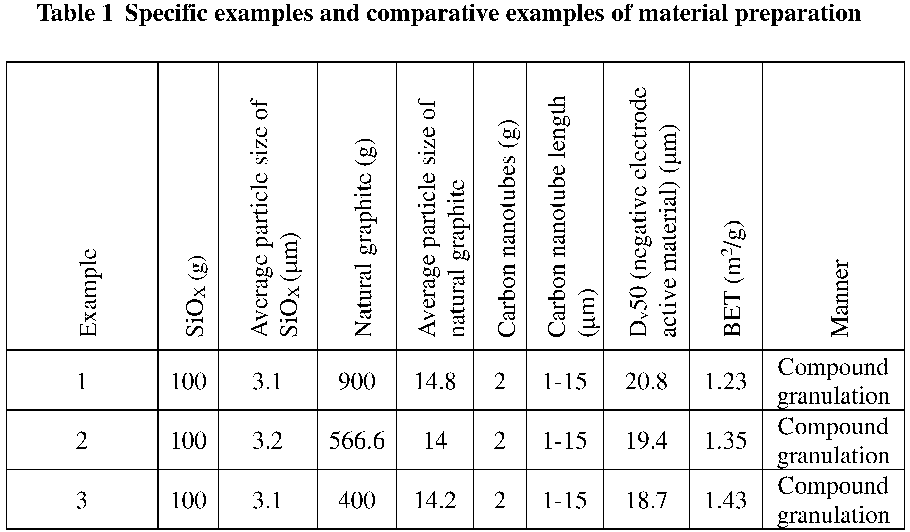

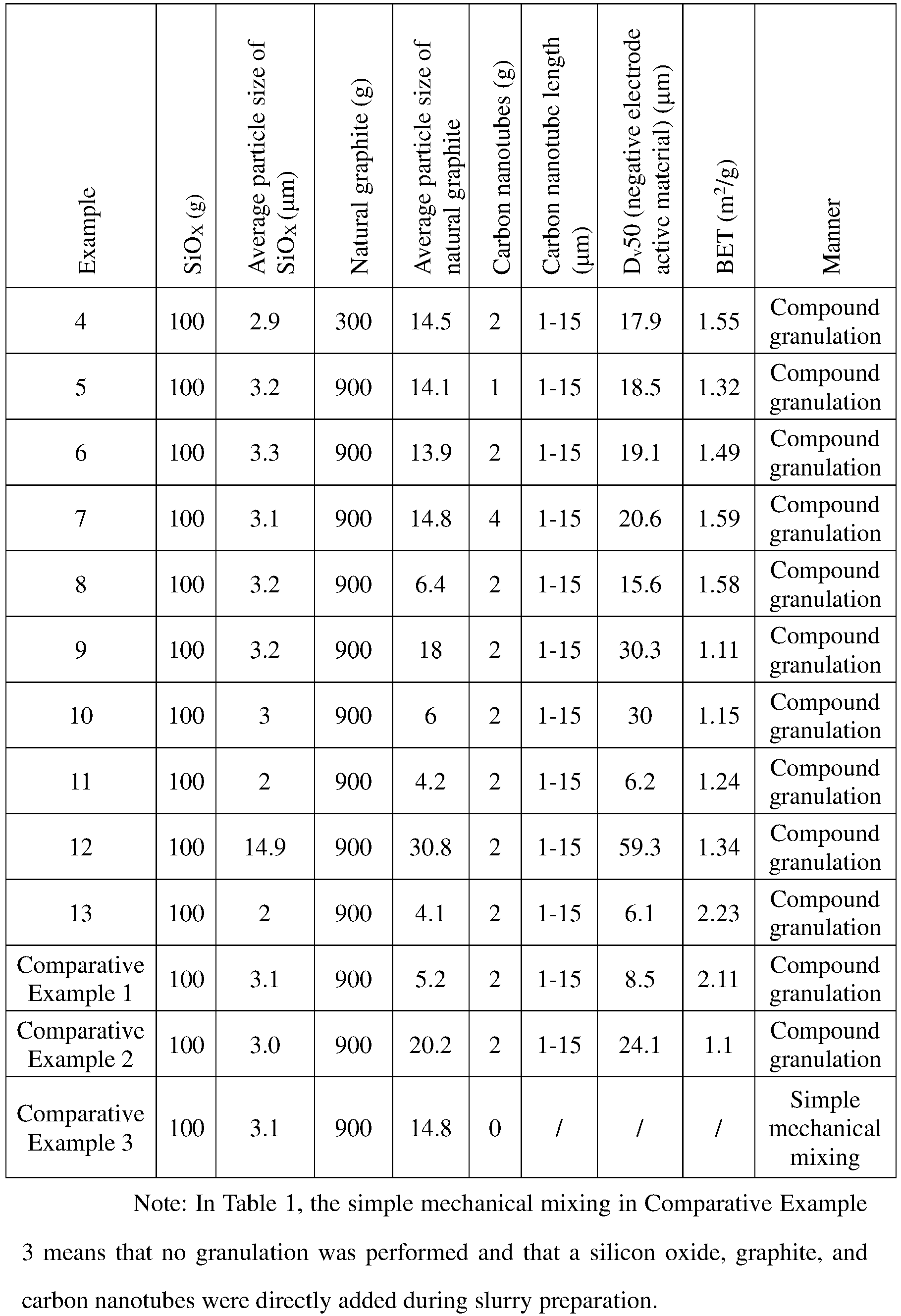

In Example 1 to Example 13, Comparative Example 1, and Comparative Example 2 in Table 1, a thickness of amorphous carbon ranged from 20 nm to 50 nm under the control of the process of sintering dry powder in a nitrogen atmosphere. A main function of amorphous carbon was to cooperate with carbon nanotubes to increase conductivity of a matrix silicon oxide, and enhance contact between the silicon oxide and graphite after granulation, so as to enhance interface contact. The thickness of amorphous carbon needed to be controlled within 500 nm. Too thick amorphous carbon is not conducive to improving ion conduction and long - range conductivity of carbon nanotubes.

### Test method

1. Specific surface area test: At a constant low temperature, after amounts of gas adsorbed by a solid surface under different relative pressures were tested, an adsorption amount of a monomolecular layer of the sample was found based on the Brunauer-Emmett-Teller adsorption theory and its equation (BET equation), to calculate a specific surface area of the solid. An average area occupied by N₂ molecules was 16.2 A². 1.5 g to 3.5 g of a powder sample was weighed and placed into a test sample tube of TriStar II 3020, and then the sample was tested after being degassed at 200°C for 120 min.
2. Particle size test of negative electrode active material: About 0.02 g powder sample was put into a 50 ml clean beaker, about 20 ml deionized water was added into the beaker with a few drops of surfactants (1%) added to fully disperse the powder in the water. Then the beaker was placed into a 120 W ultrasonic cleaning machine for ultrasonic processing for 5 min, and after that, a MasterSizer 2000 was used to test the particle size, that is, Dᵥ50 of the negative electrode active material. Dᵥ50 indicated a particle size of the material in volume-based particle distribution when a cumulative volume of particles calculated in ascending order of particle sizes accounted for 50% of the total volume of particles.
3. Electrode plate particle size test (average particle size): A cross-sectional SEM diagram of the electrode plate was photographed. With a multiple of 500X, 100 graphite or silicon particles were selected in backscattering mode to measure an average value, that is, average particle size, of largest diameters (longest distance between edges of a particle) of the particles, to obtain an average particle size of graphite and an average particle size of the silicon oxide.

### Full battery estimation

### Preparation of battery cell

An active substance LiCoO₂, a conductive carbon black, and a binder polyvinylidene fluoride (PVDF) were fully stirred and uniformly mixed in an N-methylpyrrolidone solvent system at a mass ratio of 96.7:1.7:1.6, and then the resulting mixture was applied onto an Al foil, followed by drying and cold pressing to obtain a positive electrode.

A given amount of the silicon material in the example was mixed to prepare mixed powder with a gram capacity of 500 mAh/g. The mixed negative electrode, a conductive agent acetylene black, and polyacrylic acid (PAA) were fully stirred and uniformly mixed at a mass ratio of 95:1.2:3.8 in deionized water, and the resulting mixture was applied on a Cu foil, followed by drying and cold pressing to obtain a negative electrode. A PE porous polymer film was used as a separator. The positive electrode, the separator, and the negative electrode were stacked in order, so that the separator was sandwiched between the positive electrode and negative electrode for separation, and the stack was wound to obtain a bare cell. The bare battery cell was placed in an outer package, the prepared electrolyte was injected, and packaging was performed, followed by processes such as formation, degassing, and trimming, to obtain a full battery cell.

A method for preparing the electrolyte for battery cell preparation was as follows: In an environment with a water concentration less than 10 ppm, lithium hexafluorophosphate, fluoroethylene carbonate (FEC), and a non-aqueous organic solvent (a mass ratio of ethylene carbonate (EC) to dimethyl carbonate (DMC) to diethyl carbonate (DEC) was equal to 1:1:1) were mixed, where a weight concentration of the fluoroethylene carbonate was 10 wt%. The lithium salt used in batteries in all examples in Table 2 was lithium hexafluorophosphate, with a concentration of 1 mol/L.

### Cycling test

At a test temperature of 25°C/45°C, the battery was charged to 4.45 V at a constant current of 0.7C, constant-voltage charged to 0.025C, left standing for 5 minutes, and then discharged to 3.0 V at 0.5C. A capacity obtained in this step was an initial capacity. The 0.7C charge/0.5C discharge cycling test was performed, then charge and discharge was repeatedly performed, and a discharge capacity value in each cycle was recorded. The following formula was used to calculate a cycling capacity retention rate: Capacity retention rate in the N^{th} cycle=(Discharge capacity in the N^{th} cycle/Discharge capacity in the first cycle)×100%. At 25°C, when the capacity retention rate was 90%, the number of cycles at the retention rate was recorded, that is, the number of cycles for 90% at 25°C. At 45°C, when the capacity retention rate was 80%, the number of cycles at the retention rate was recorded, that is, the number of cycles for 80% at 45°C.

### Swelling rate test for battery at full charge

An initial thickness D0 of a battery cell undergone no charge and discharge was measured with a spiral micrometer. The battery cell was in a fully charged state after 400 cycles, and a thickness D1 of the battery cell at this point was measured with the spiral micrometer. A thickness swelling rate ε of the battery was calculated according to the following formula: ε=(D1-D0)/D0×100%. In this way, the swelling rate of the battery cell in the 400^{th} cycle at 25°C or 45°C was obtained.

**Table 2**

| Example | Number of cycles to 90% capacity at 25°C | Number of cycles to 80% capacity at 45°C | Swelling rate of battery cell after 400 cycles at 25°C | Swelling rate of battery cell after 400 cycles at 45°C |
|---|---|---|---|---|
| 1 | 612 | 456 | 7.10% | 8.10% |
| 2 | 603 | 466 | 7.20% | 8.00% |
| 3 | 623 | 452 | 7.10% | 8.20% |
| 4 | 621 | 467 | 7.00% | 8.10% |
| 5 | 619 | 459 | 7.90% | 9.00% |
| 6 | 611 | 467 | 7.10% | 8.30% |
| 7 | 634 | 456 | 6.80% | 7.80% |
| 8 | 601 | 430 | 7.45% | 8.22% |
| 9 | 603 | 431 | 7.46% | 8.25% |
| 10 | 613 | 439 | 8.01% | 9.15% |
| 11 | 607 | 436 | 7.89% | 8.78% |
| 12 | 612 | 455 | 7.10% | 8.30% |
| 13 | 600 | 425 | 8.10% | 8.45% |
| Comparative Example 1 | 550 | 410 | 8.80% | 9.90% |
| Comparative Example 2 | 561 | 421 | 8.40% | 9.70% |
| Comparative Example 3 | 501 | 399 | 10.20% | 10.90% |

The comparison between Examples 1 to 4 and Comparative Example 3 shows that because the particle size of the silicon particle was smaller than that of graphite, as a silicon content of the composite particle increased, the particle size of the composite particle decreased, and the BET increased. Compared with Comparative Example 3, although the silicon content was increased, cycling could still be improved. Therefore, the silicon-carbon composite was controlled to satisfy the following relation: 2≤b/a<6, where a represented the average particle size of the silicon oxide, b represents the average particle size of graphite. The silicon oxide and graphite fell within the proper particle size range, so that the cycling was improved, and both the swelling rate of the battery cell in the 400^{th} cycle at 25°C and the swelling rate of the battery cell in the 400^{th} cycle at 45°C were also improved.

The comparison between Examples 5 to 7 and Comparative Example 3 illustrates that the particle size and the specific surface area of the composite particle increased with the amount of carbon nanotubes. Compared with Comparative Example 3, cycling could still be improved.

The comparison between Examples 8 and 9 and Comparative Examples 1 to 3 illustrates that particle sizes of the silicon and graphite needed to satisfy the relation 2≤b/a<6 to obtain a proper granulation particle size and better cycling improvement.

The comparison between Examples 10 and 11 and Comparative Example 3 illustrates that particle sizes of the composite particle obtained through composite granulation needed to satisfy the relation a+b≤c≤5b to obtain a proper granulation particle size and better cycling improvement.

The comparison between Examples 12 and 13 and Comparative Example 3 illustrates that Dᵥ50 (median particle size) of the negative electrode active material needed to fall within a range of 6.1 µm to 60 µm to obtain a proper negative electrode active material and better cycling performance.

On the basis of Example 7, conditions remained unchanged except that the lithium salt was further changed. Specific concentrations of the lithium salt are shown in Table 3.

**Table 3**

| | Electrolyte | | | Test | |
|---|---|---|---|---|---|
| | LiFSI (mol/L) | LiPF₆ (mol/L) | Mass ratio of LiFSI to LiPF₆ | Number of cycles for 80% capacity at 45°C | Swelling rate of battery cell after 400 cycles at 45°C |
| Example 7 | 0 | 1 | 0 | 456 | 7.80% |
| Example 14 | 0.05 | 1 | 0.062 | 463 | 7.1% |
| Example 15 | 1 | 1 | 1.231 | 480 | 6.4% |
| Example 16 | 1 | 0.3 | 4.105 | 473 | 7.0% |

| | | | | | |
|---|---|---|---|---|---|
| Note: The molar mass of LiFSI is 187.07 g/mol, and the molar mass of LiPF₆ is 151.91 g/mol. | | | | | |

Examples 14 to 16 were similar to Example 7 except that cycling performance and swelling performance of the battery cell were improved by adding the lithium salt bis(fluorosulfonyl)imide (LiFSI), and adjusting a mass ratio of LiFSI to LiPF₆. This was mainly because interaction between the silicon-carbon composite in a negative electrode material and the lithium salt in the electrolyte enhanced contact between the negative electrode and the electrolyte, thereby improving its cycling performance.

Although some example embodiments of this application have been illustrated and described, this application is not limited to the disclosed embodiments. On the contrary, a person of ordinary skill in the art will recognize that some modifications and changes can be made to the embodiments without departing from the spirit and scope of this application described in the appended claims.

## Claims

1. A negative electrode active material, comprising a silicon-carbon composite, wherein the silicon-carbon composite comprises a silicon oxide and graphite, a general formula of the silicon oxide is SiOx, wherein 0.5≤x≤1.6,and the silicon-carbon composite satisfies the following relation: 2≤b/a<6, wherein a represents an average particle size of the silicon oxide, and b represents an average particle size of graphite.

2. The negative electrode active material according to claim 1, wherein a ranges from 2 µm to 6 µm.

3. The negative electrode active material according to claim 1, wherein b ranges from 4.1 µm to 30 µm.

4. The negative electrode active material according to claim 1, wherein c represents Dᵥ50 of the negative electrode active material, and c ranges from 6.1 µm to 60 µm.

5. The negative electrode active material according to claim 4, wherein the negative electrode active material satisfies the following relation: a+b≤c≤5b.

6. The negative electrode active material according to claim 1, wherein the negative electrode active material further comprises a protective layer provided on a surface of the silicon-carbon composite, and the protective layer comprises at least one of carbon nanotubes, amorphous carbon, or graphene.

7. The negative electrode active material according to claim 6, wherein at least one of the following conditions (i) to (iii) is satisfied:
(i) that the protective layer comprises a first protective material and a second protective material, wherein the first protective material comprises at least one of carbon nanotubes, amorphous carbon, or graphene, and the second protective material comprises at least one of carbon nanotubes, amorphous carbon, or graphene;
(ii) that a tube length of the carbon nanotube is d, wherein 1 µm≤d≤15 µm; and
(iii) that in the negative electrode active material, a mass fraction of the protective layer ranges from 0.05% to 5%.

8. The negative electrode active material according to claim 6, wherein the protective layer comprises a first protective material and a second protective material, wherein a thickness of the first protective material ranges from 20 nm to 300 nm, and a thickness of the second protective material ranges from 20 nm to 500 nm.

9. The negative electrode active material according to claim 1, wherein at least one of the following conditions (a) to (b) is satisfied:
(a) that a specific surface area of the negative electrode active material ranges from 1 m²/g to 50 m²/g; and
(b) that in the negative electrode active material, a mass fraction of the silicon oxide ranges from 5% to 50%, and a mass fraction of graphite ranges from 25% to 93.5%.

10. An electrochemical apparatus, comprising a negative electrode, an electrolyte, a separator, and a positive electrode, wherein the negative electrode comprises the negative electrode active material according to claim 1.

11. The electrochemical apparatus according to claim 10, wherein the electrolyte further comprises a lithium salt, wherein the lithium salt comprises lithium bis(fluorosulfonyl)imide and lithium hexafluorophosphate.

12. The electrochemical apparatus according to claim 11, wherein a concentration of the lithium salt ranges from 1 mol/L to 2 mol/L.

13. The electrochemical apparatus according to claim 11, wherein a mass ratio of the lithium bis(fluorosulfonyl)imide to the lithium hexafluorophosphate ranges from 0.06 to 5.

14. An electronic apparatus, comprising the electrochemical apparatus according to any one of claims 10 to 13.
